# EUROPÄISCHE PATENTANMELDUNG

(11) **EP 0 835 715 A1**
(43) Veröffentlichungstag der Anmeldung: **15.04.1998**
(21) Anmeldenummer: 97117448.7
(22) Anmeldetag: 09.10.1997
(51) Int. Cl.: B23K 26/06, B23K 26/08

(54) **Vorrichtung und Verfahren zur Laser-Behandlung eines Werkstückes mittels eines Diodenlasers**

(30) Priorität: 12.10.1996 DE 19642194; 15.10.1996 DE 19642504; 27.11.1996 DE 19649113; 16.01.1997 DE 19701222
(71) Anmelder: Krause, Volker, 67292 Kirchheimbolanden (DE); Ullmann, Christoph, Dr., 53639 Königswinter (DE)
(72) Erfinder: Krause, Volker, 67292 Kirchheimbolanden (DE); Ullmann, Christoph, Dr., 53639 Königswinter (DE)
(74) Vertreter: Graf, Helmut, Dipl.-Ing.

(57) **Zusammenfassung**

Die Erfindung bezieht sich auf eine Vorrichtung und ein Verfahren zur Laserbehandlung von Werkstücken. Als Strahlenquelle ist ein Diodenlaser (4) vorgesehen, welcher mit seiner Laser-Optik zur Ausbildung eines Fokus in Form einer Fokuslinie (13) ausgebildet ist. Es sind Mittel vorgesehen, mit denen ein Ausrichten der Fokuslinie derart erfolgt, daß an jedem Punkt einer gekrümmten Bearbeitungskontur (2) die Fokuslinie (13) mit ihrer Längserstreckung die Tangente an die Bearbeitungskontur bildet.

## Beschreibung

Die Erfindung bezieht sich auf eine Vorrichtung gemäß Oberbegriff Patentanspruch 1 sowie auf ein Verfahren gemäß Oberbegriff Patentanspruch 20.

Diodenlaser sind bekannt und werden beispielsweise auch für die Laserbearbeitung von Werkstücken verwendet. Aufgrund der Resonatorgeometrie von Diodenlasern bzw. deren Laserchips weist der Laserstrahl solcher Laser relativ große Divergenzwinkel (größer als 1000 mrad) in der Ebene senkrecht zur aktiven Schicht des Halbleiters (auch Fast-Axis) auf, während in der Ebene parallel zur aktiven Schicht (auch Slow-Axis) der Divergenzwinkel wesentlich kleiner ist und beispielsweise 100 bis 200 mrad beträgt. Für eine direkte Nutzung der Laserstrahlung zur Bearbeitung von Werkstücken oder Materialien sind diese Divergenzwinkel zu groß, so daß eine optische Aufbereitung der Strahlung durch Mikrooptiken erforderlich und üblich ist.

Beispielsweise durch eine querliegende Mikrozylinderlinse für jeden Halbleiterchip bzw. für sämtliche an diesem gebildeten Emitter kann die Strahldivergenz in der Ebene senkrecht zur aktiven Schicht auf ca. 10 mrad reduziert werden. Das dann vorliegende Strahlenbündel mit beispielsweise 10 x 180 mrad Divergenz in den beiden Achsrichtungen läßt sich durch eine Optik mit f/# von beispielsweise von f/1,5 bis f/4 weiter bearbeiten. Bei einer Fokussierung eines solchen Strahles ergibt sich das Bild einer Linie, d.h. eines Linien-Fokus, und zwar als Abbildung der Emitter des jeweiligen Laserchips, die in einer Linie nebeneinander über die Breite (üblicherweise ca. 10 mm) des Chips verteilt sind.

Da dieser Linienfokus als störend empfunden wird, wird versucht, mit optischen Mitteln eine Auflösung dieses Linien-Fokus, d.h. eine Umformung der Laser-Strahlung zur Bildung in eines gleichförmigen, möglichst kreisförmigen Fokus zu erreichen, und zwar beispielsweise durch Bündelung zahlreicher Lichtleiter-Fasern in einem beispielsweise kreisförmigen Querschnitt (US 5 127 068, US 4 763 975, US 4 818 062, US 5 268 978 und US 5 258 989), durch sogenanntes Strahldrehen, bei dem eine Umordnung der einzelnen Laserstrahlen zur Erzielung eines möglichst kreisförmigen Fokus erfolgt (US 5 168 401, EP 0 484 276, WO 95/15510, DE 44 38 368) oder durch parallele Verschiebung einzelner Laserstrahlen (US 3 396 344, DE 195 00 513, DE 195 44 448).

Durch diese bekannten Verfahren ist zwar eine nahezu gleiche Strahlqualität, d.h. insbesondere gleiche Strahldivergenz und ein gleicher Strahlquerschnitt in beiden Achsrichtungen erreichbar. Die bekannten Methoden sind aber nur mit relativ hohem Aufwand bei der Laseroptik realisierbar. Insbesondere bei Diodenlasern mit hoher Ausgangsleistung verteuert sich dieser Laser und ist damit dann nicht konkurenzfähig gegenüber konventionellen Lasern. Weiterhin sind die bekannten Methoden zur Verbesserung der Strahlqualität wegen der Komplexität der optischen Elemente mit großen Verlusten bei der Leistungsdichte verbunden. In der Praxis werden mit diesen bekannten Anordnungen nur Leistungsdichten von 10⁴ - 10⁵ W/cm² erreicht. Ohne die in solchen Optiken auftretenden Linsenfehler und Verluste wären aber Leistungsdichten zwischen 10⁶ - 10⁷ W/cm² möglich.

Der Erfindung liegt die Aufgabe zugrunde, die vorgenannten Nachteile zu vermeiden und eine Vorrichtung sowie ein Verfahren zur Laserbearbeitung von Werkstücken unter Verwendung wenigstens eines zumindest einen Diodenlaser aufweisenden Laserkopfes aufzuzeigen, bei dem bzw. bei der die vorgenannen Nachteile vermieden sind. Zur Lösung dieser Aufgabe sind eine Vorrichtung und ein Verfahren entsprechend den Patentansprüchen 1 bzw. 20 ausgebildet.

Bei der erfindungsgemäßen Vorrichtung bzw. bei dem erfindungsgemäßen Verfahren zur Laserbearbeitung von Werkstücken wird bewußt auf eine Umformung des Laserstrahls in einen nahezu kreisförmig fokussierbaren Strahl verzichtet. Vielmehr wird der Linienfokus verwendet. Hierbei erfolgt bei einer gekrümmten Arbeits- oder Bearbeitungskontur ein Ausrichten der Fokuslinie derart, daß diese Fokuslinie mit ihrer Längserstreckung an jedem Punkt dieser Kontur deren Tangente bildet. Dies hat den Vorteil, daß trotz des Linienfokus und trotz der Vermeidung einer aufwendigen optischen Umformung eine schmale Arbeits- oder Bearbeitungskontur erreicht wird. Weiterhin wird bei der Erfindung eine höhere Leistungsdichte als beim Stand der Technik erzielt.

Weiterbildungen der Erfindung sind Gegenstand der Unteransprüche. Die Erfindung wird im Folgenden anhand der Figuren an Ausführungsbeispielen näher erläutert. Es zeigen:

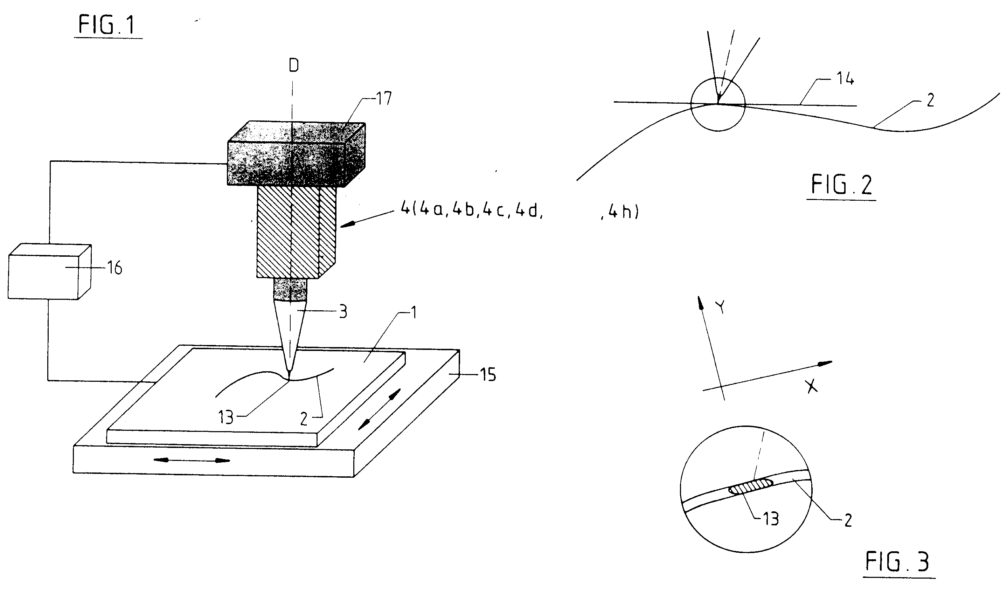

- Fig. 1: in vereinfachter perspektivischer Darstellung eine Vorrichtung gemäß der Erfindung zur Bearbeitung von Werkstücken mittels eines Laserstrahles;
- Fig. 2: in Einzeldarstellung eine Bearbeitungskontur;
- Fig. 3: in vergrößerter Darstellung den Fokus des Laserstrahles auf dem Werkstück im Bereich der Bearbeitungskontur;
- Fig. 4: in vereinfachter Darstellung einen Schnitt durch eine Diodenlaseranordnung bestehend aus einer Vielzahl von stapelartig übereinander angeordneten Laser-Chips, die jeweils eine Vielzahl von nebeneinander angeordneten und über die Cipbreite verteilte Emitter bilden, zusammen mit einer Laseroptik, und zwar in einem Schnitt senkrecht zu der aktiven Schicht der Laser-Chips bzw. deren Emitter;
- Fig. 5: einen Schnitt durch die Diodenlaseranordnung und die Laseroptik der Figur 4 in einer Schnittebene parallel zu den aktiven Schichten der Diodenelemente;
- Fig. 6 und 7: in Darstellungen ähnlich den Figuren 4 und 5 die Diodenlaseranordnung zusammen mit der Laseroptik in einem Schnitt senkrecht zur aktiven Schicht der Diodenelemente (Figur 6) bzw. parallel zur aktiven Schicht (Figur 7) bei einer weiteren, möglichen Ausführungsform;
- Fig. 8 und 9: Schnittdarstellungen ähnlich wie in Figuren 4 und 5 in einer Ebene senkrecht zu aktiven Schicht (Figur 8) sowie in einer Ebene parallel zur aktiven Schicht (Figur 9) bei einer weiteren Ausführungsform, bei der insgesamt drei Laserdiodenanordnungen verwendet sind;
- Fig. 10: in Positionen a - f zur Erläuterung verschiedene Möglichkeiten für die Verwendung von Diodenlaseranordnungen, insbesondere auch für das Frequenzmultiplexing;
- Fig. 11 und 12: in Darstellungen ähnlich den Figuren 8 und 9 einen Diodenlaser in Modul-Bauweise und in einem Schnitt senkrecht zur aktiven Schicht der Diodenelemente (Figur 11) bzw. parallel zur aktiven Schicht (Figur 12);
- Fig. 13 und 14: in Darstellungen ähnlich den Figuren 11 und 12 einen Diodenlaser in Modul-Bauweise und in einem Schnitt senkrecht zur aktiven Schicht der Diodenelemente (Figur 13) bzw. parallel zur aktiven Schicht (Figur 14);
- Fig. 15 und 16: in Darstellungen ähnlich den Figuren 13 und 14 einen Diodenlaser bzw. eine Laseroptik mit einer optischen Einrichtung zum Rotieren des Laserstrahls bzw. der Fokuslinie;
- Fig. 17: in vergrößerter perspektivischer Darstellung ein Dreh- oder Dove-Prisma zur Verwendung bei dem Diodenlaser der Figuren 15 und 16;
- Fig. 18: in den Positionen a - b Draufsichten jeweils auf die Vorder- und Rückfläche des Drehprismas, zusammen mit dem virtuellen Bild eines bandförmigen auftreffenden bzw. austretenden Laserstrahles bei verschiedenen Drehstellungen des Drehprismas.

In den Figuren ist 1 ein Werkstück, welches der einfacheren Darstellung wegen als Platte wiedergegeben ist und welches entlang einer grkrümmten Kontur 2 mit einem fokussiertem Laserstrahl 3 bearbeitet, beispielsweise geschweißt oder geschnitten werden soll.

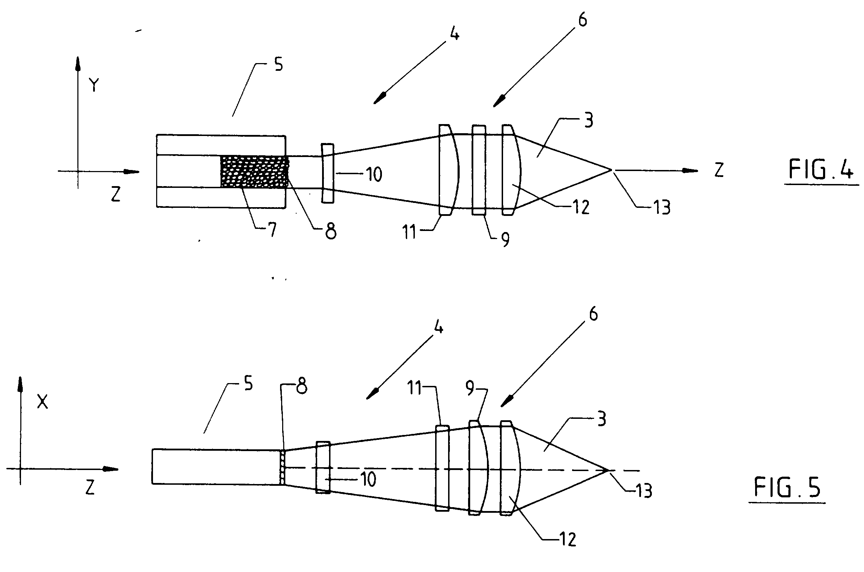

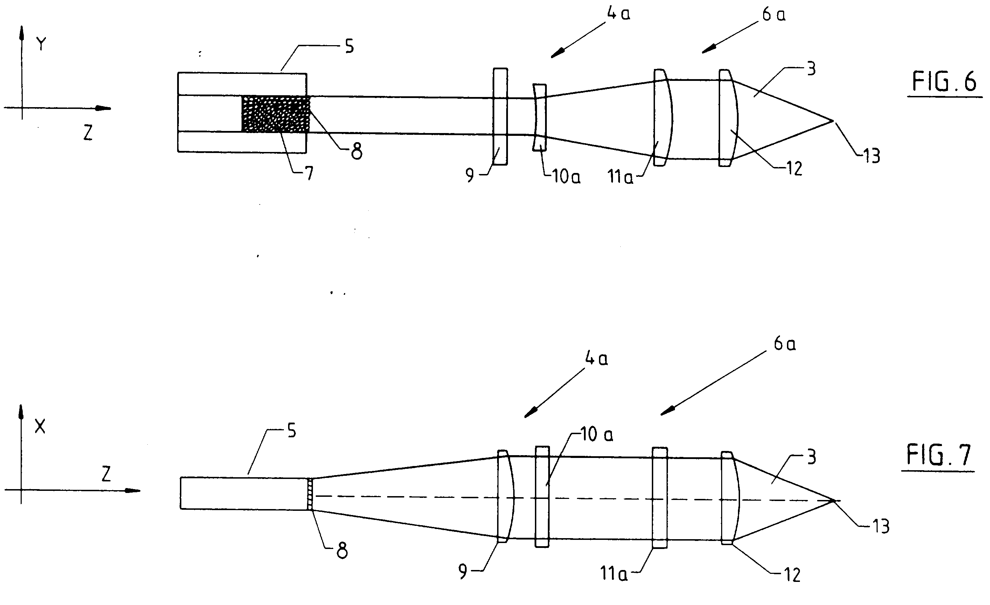

Zur Erzeugung des Laserstrahles 3 dient beispielsweise der in den Figuren 4 und 5 wiedergegebene Diodenlaser 4, der aus einer Diodenlaseranordnung 5 und einer Laseroptik 6 besteht. Zur Einfachung der Beschreibung sind in den Figuren 4 und 5, aber auch in den Figuren 6 - 9 jeweils mit X, Y und Z drei senkrecht zueinander angeordnete Koordinatenrichtungen angegeben, die nachfolgend als X-Achse, Y-Achse und Z-Achse bezeichnet sind.

Die Laserdiodenanordnung 5 besteht aus mehreren Laser-Chips 7, die mit ihren Oberflächenseiten und aktiven Schichten in Ebenen senkrecht zu der durch die Y-Achse und Z-Achse definierte Zeichenebene der Figur 4, d.h. in Ebenen liegen, die durch die X-Achse und Z-Achse definiert sind. Die Laserchips sind stapelartig in Richtung der Y-Achse übereinander angeordnet, und zwar zusammen mit nicht dargestellten, jeweils eine Wärmesenke für die Laserchips bildenden Substraten. Jeder Laserchip 7 bildet mehrere in Richtung der X-Achse gegeneinander versetzte, das Laserlicht abstrahlende Diodenelemente bzw. Emitter. Die Z-Achse bildet die optische Achse der Laseroptik 6.

Aufgrund der Resonanzgeometrie der Laserchips bzw. deren Emitter besitzt der von den Emittern jeweils erzeugten Laserstrahl einen sehr großen Divergenzwinkel von größer als 1000 mrad in der Ebene bzw. Achse senkrecht zur aktiven Schicht, d.h. bei der für die Figuren 4 und 5 gewählten Darstellung in der Y-Achse (auch Fast Axis) bzw. Y-Z-Ebene und einen kleineren Divergenzwinkel von etwa 100 bis 200 mrad in der Ebene bzw. Achse parallel zur aktiven Schicht (auch Slow Axis) bzw. in der X-Z-Ebene. Es ist erforderlich, sowohl in der Slow Axis als auch in der Fast Axis eine Kollimation der Laserstrahlung vorzunehmen, und zwar in der Fast-Axis durch einen Fast-Axis-Kollimator 8, der aus einer Anordnung einer Vielzahl von Mikrozylinderlinsen besteht, und zwar jeweils eine sich in Richtung der X-Achse erstreckende Mikrozylinderlinse für jeden Laserdiodenchip 7. Mit diesem Faxt-Axis-Kollimator 8 kann beispielsweise derzeit, d.h. mit herkömmlichen Linsen die Strahldivergenz in der Fast-Axis auf ca. 10 mrad reduziert werden. Auch eine geringere Strahldivergenz ist möglich. Für die Kollimation in der Slow-Axis (X-Achse) ist ein ebenfalls als Zylinderlinse ausgebildeter Slow-Axis-Kollimator 9 vorgesehen.

Die Kollimatoren 8 und 9 sind Bestandteil der Laseroptik 6. Diese enthält zusätzlich eine von Zylinder-Linsen 10 und 11 gebildete Strahl-Aufweitungsoptik, die zwischen dem Fast-Axis-Kollimator 8 und dem Slow-Axis-Kollimator 9 im Strahlengang der Laserstrahlung angeordnet ist und mit der die in der Ebene senkrecht zur aktiven Schicht der Laserchips 7 im wesentlichen parallele Laserstrahlung aufgeweitet wird, und zwar etwa bei dem Faktor 1,5 bis 4, wobei die Strahlendivergenz in Richtung der Fast-Axis (Y-Achse) dann beispielsweise etwa 2,5 bis 7 mrad beträgt. Mit Hilfe einer Fokussieroptik 12, die in den Figuren 4 und 5 als sphärische Linse dargestellt ist und die beispielsweise eine Brennweite f = 100 mm aufweist, wird der Laserstrahl so fokussiert, daß er auf dem Werkstück 1 einen linienförmigen Fokus bzw. Linienfokus 13 bildet, der eine kleine Fokusbreite von beispielsweise 0,25 bis 0,7 mm aufweist. Die größere Länge des Linienfokus ist durch die Abmessungen bestimmt, die die Laserchips 7 in Richtung der
X-Achse aufweisen.

Da die Aufweitungsoptik von den Zylinderlinsen 10 und 11 gebildet ist, deren Zylinder-Achsen in der X-Achse liegen, erfolgt die Aufweitung lediglich in der Ebene senkrecht zur aktiven Schicht, und zwar derart, daß nach der Zylinderlinse 11 in dieser Ebene eine im Vergleich zur Strahldivergenz nach dem Kollimator 8 verringerte Divergenz erreicht wird und nach dem Slow-Axis-Kollimator 9 ein auch in der Ebene parallel zur aktiven Schicht paralleles Laserstrahlbündel erhalten ist, welches mittels der Fokussieroptik 12 fokussiert wird. Durch die Aufweitung des Strahles in der Ebene senkrecht zur aktiven Schicht mit anschließender Fokussierung wird durch die geringe Fokusbreite des Linienfokus eine hohe Leistungsdichte erreicht.

Mit der Laseroptik 6 läßt sich weiterhin ein genügend großer Abstand zwischen der Diodenlaseranordnung 5 und dem Linienfokus 13 auf dem Werkstück 1 bzw. dem von diesen Linienfokus 13 gebildeten Arbeitspunkt derart erreichen, daß die Diodenlaseranordnung 5 zuverlässig gegen Verschmutzen usw. gesichert ist.

Da der Linienfokus 13 eine durch die Verteilung der Emitter der Laserchips 7 in Richtung der X-Achse verursachte Länge aufweist, die wesentlich größer ist als die Breite des Linienfokus erfolgt die Bewegung des Linienfokus 13 entlang der gekürmmten Bearbeitungskontur 2 derart, daß dieser Linienfokus 13 mit seiner Längsachse an jedem Punkt der gekrümmten Bearbeitungskontur jeweils die Tangente 14 an diese Arbeitskontur 2 bildet.

Das Werkstück 1 ist für diese Bearbeitung auf einem Tisch 15 aufgespannt, der in zwei senkrecht zueinander verlaufenden Achsen, und zwar bei der dargestellten Ausführungsform um die Y-Achse und die X-Achse bewegt werden kann, die auch die Oberseite des Werkstückes 1 definieren, und zwar durch eine Steuereinrichtung 16. Oberhalb des Tisches 15 befindet sich der Laserkopf bzw. Diodenlaser 4, der mit der Z-Achse senkrecht zur Ebene des Tisches bzw. des Werkstückes 1 orientiert ist und an einer Dreh-Einrichtung 17 gehalten ist, mit der der Diodenlaser 4 um die Drehachse D, d.h. um die Z-Achse bzw. um die optische Achse seiner Laseroptik 6 gedreht werden kann. Die Dreheinrichtung 17 wird ebenfalls von der Steuereinrichtung 16 gesteuert, und zwar beispielsweise nach einem vorgegebenen Programm entsprechend der Bearbeitungskontur 2 derart, daß in der vorstehend bereits erwähnten Weise der Linienfokus 13 jeweils mit seiner Längserstreckung die Tangente 14 an die Bearbeitungskontur 2 bildet. Zur Erzeugung der Bearbeitungskontur 2 wird der Tisch mit dem Werkstück 1 in der Y-Achse und X-Achse entsprechend bewegt. Die Drehachse, um die der Diodenlaser 4 von der Dreheinrichtung 17 gedreht wird, liegt damit auch in der Mitte des von diesem Diodenlaser erzeugten Linienfokus 13. Mit der beschriebenen Vorrichtung ist eine Laserbearbeitung von Werkstücken 1 entlang einer sehr schmalen Bearbeitungskontur 2 mit hoher Leistung und Leistungsdichte möglich.

Die Figuren 6 und 7 zeigen einen Diodenlaser 4a, der sich von dem Diodenlaser der Figuren 4 und 5 im wesentlichen dadurch unterscheidet, daß bei der dortigen Laseroptik 6a die von den Zylinderlinsen 10a und 11a gebildete Aufweitungsopitk dem Strahlengang des Laserstrahls nach dem Slow-Axis-Kollimator 9 vorgesehen ist, und zwar wiederum im Strahlengang vor der Fokussieroptik 12.

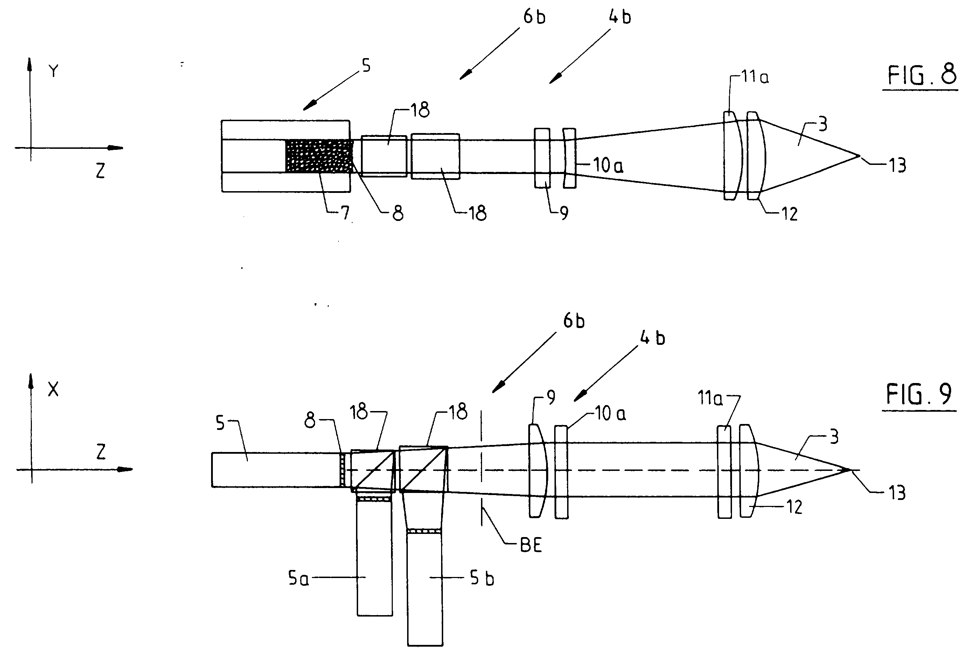

Die Figuren 8 und 9 zeigen einen Diodenlaser 4b, der hinsichtlich seiner Laseroptik 6b dem Diodenlaser 4a der Figuren 6 und 7 entspricht, der aber zusätzlich zu der Diodenlaseranordnung 5 noch zwei weitere Diodenlaseranordnungen 5a und 5b mit jeweils einem eigenen Fast-Axis-Kollimator 8 besitzt und deren Laser-Licht über optische Koppelelemente 18 in den Strahlengang der Diodenlaseranordnung 5 eingekoppelt werden, und zwar zwischen dem Fast-Axis-Kollimator 8 der Diodenlaseranordnung 5 und dem Slow-Axis-Kollimator 9, der für sämtliche Diodenlaseranordnungen 5 - 5b des Diodenlasers 4b gemeinsam vorgesehen ist. Die Diodenlaseranordnungen 5a und 5b sind so orientiert, daß die Ebenen parallel zu den aktiven Schichten der Laserchips 7 dieser Anordnungen senkrecht zur Z-Achse liegen. Die Emitter der Laserchips 7 der Diodenlaseranordnungen 5a und 5b sind an jedem Chip 7 wiederum in Richtung der X-Achse gegeneinander versetzt. Weiterhin liegt bei den Diodenlaseranordnungen 5a und 5b die Z-Achse senkrecht zu den Ebenen der aktiven Schichten.

Die beiden Koppelelemente 18 sind kaskardenartig, d.h. hintereinander im Strahlengang zwischen dem Fast-Axis-Kollimator 8 der Laserdiodenanordnung 5 und dem Slow-Axis-Kollimator 9 angeordnet. Bei der dargestellten Ausführungsform sind die Koppelelemente 18 Kantenfilter und die Laserdiodenanordnungen 5, 5a und 5b sind so ausgewählt, daß das von diesen Anordnungen erzeugte Laser-Licht unterschiedliche Wellenlänge aufweist und zwar angepaßt an die Charakteristiken der Filter. Die Wellenlänge der Laserdiodenanordnung 5 ist beispielsweise kleiner als die Wellenlägen der Laserdiodenanordnung 5a und diese wiederum kleiner als die Wellenlänge der Laserdiodenanordnung 5b. Auch andere Ausführungen sind denkbar. Insbesondere ist es auch denkbar, das Laserlicht von nur zwei Diodenlaseranordnungen oder aber von mehr als drei Diodenlaseranordnungen zu kombinieren bzw. summieren. Durch die Kombination mehrerer Diodenlaseranordnungen läßt sich auf Kosten des breiten optischen Spektrums des gesamten Lasers eine maximale Leistungsdichte im Bearbeitungsbereich erzielen.

Wesentlich ist bei dem Diodenlaser 4b, daß die optische Weglänge der Lichtwege zwischen den aktiven Bereichen, d.h. den Emittern der Diodenlaseranordnungen 5, 5a, 5b und einer beliebigen Bezugsebene BE senkrecht zur Z-Achse im Strahlungsweg nach dem optischen Kopplungselementen 18 jeweils gleich ist.

Ebenso wie der Diodenlaser 4 werden auch die Diodenlaser 4a bzw. 4b an der Dreh- bzw. Rotationseinheit 17 verwendet, und zwar in der Weise, daß beim Bearbeiten des Werkstückes 1 entlang der Bearbeitungskontur 2 wiederum durch gesteuertes Drehen um die Drehachse D der Linienfokus 13 in der vorbeschriebenen Weise in Bezug auf den Verlauf der Bearbeitungskontur 2 orientiert wird.

Vorstehend wurde davon ausgegangen, daß der jeweilige Diodenlaser 4, 4a bzw. 4b mit der optischen Achse seiner Laseroptik 6 senkrecht zur Ebene des Werkstückes 1 orientiert ist und hierbei die Y-Achse und X-Achse des jeweiligen Diodenlasers zugleich auch die Ebene des Werkstückes 1 definieren. Es sind hiervon auch abweichende Ausführungen denkbar, bei denen beispielsweise der Laserstrahl des Diodenlasers umgelenkt und nach dieser Umlenkung den Linienfokus 13 bildet. Auch in diesem Fall erfolgt eine Drehung durch die Dreh- oder Rotationseinheit 17 um die Drehachse D, die die Mittelachse des Linienfokus 13 ist, wobei die Ebene des Werkstückes 1 allerdings durch die Y-Achse und X-Achse des Diodenlasers 4 bestimmt ist.

Die elektrische Versorgung des jeweiligen, an der Rotations- oder Dreheinheit 17 vorgesehenen Diodenlasers 4, 4a bzw. 4b erfolgt beispielsweise über Schleifkontakte, oder aber über elektrische Kabel, die ein mehrfaches Verdrehen ermöglichen. Im letzten Fall erfolgt dann am Ende einer jeden Bearbeitung ein Zurückdrehen der Rotationseinheit 17 mit dem Diodenlaser 4, 4a bzw. 4b in eine Ausgangsstellung. Das Zuführen und Abführen des Kühlmediums an den Diodenlaser 4, 4a bzw. 4b erfolgt bevorzugt über Drehkupplungen.

Die beschriebene Vorrichtung eignet sich beispielsweise für Schweißaufgaben (auch Nahtschweißen) oder Schneidaufgaben. Durch die Führung bzw. Steuerung der Orientierung des jeweiligen Diodenlasers können Schweißnähte oder Schnitte mit sehr geringer Breite ausgeführt werden, wodurch auch die Schweiß- oder Schneidgeschwindigkeit erhöht und Wärmeverluste minimiert werden können. Durch die Kopplung mehrerer Diodenlaseranordnungen über die Kopplungselemente 18 sowie auch durch die Strahlaufweitung wird eine erhebliche Steigerung der Leistungsdichte bewirkt, so daß ein Schweißen mittels Tiefschweißeffekt möglich wird. Durch die beschriebene Ausrichtung des Linienfokus 13 in Bezug auf die Bearbeitungskontur wird ein gleichmäßiges Bearbeitungsverhalten in allen Richtungen des Verlaufs dieser Bearbeitungskontur erreicht.

Die beschriebene Vorrichtung eignet sich auch für Lötverfahren. Insbesondere ist hier abhängig von der Lage der Lötstellen ein Ausrichten des Linienfokus 13 zweckmäßig. Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird. So ist es grundsätzlich auch möglich, den Diodenlaser 4, 4a bzw. 4b oder den diesen Diodenlaser aufweisende Laserkopf ortsfest anzuordnen und die Ausrichtung des Linienfokus 13 tangential zu der Bearbeitungskontur dadurch zu erreichen, daß eine Optik oder ein Teil einer Optik des Diodenlasers bzw. des Laserkopfes gesteuert bewegt wird.

So ist es beispielsweise möglich, zur Strahlaufweitung anstelle der Zylinderlinsen 10, 10a und 11 bzw. 11a eine andere teleskopische Anordnung von Linsen oder Spiegeln zu verwenden. Weiterhin sind als Kopplungselemente 18 auch andere optische Anordnungen oder Elemente, wie Filteranordnungen, insbesondere Kurz- und Langpaßfilter, optische Anordnungen zur Kopplung von in unterschiedlichen Ebenen polarisierter Strahlung usw. möglich.

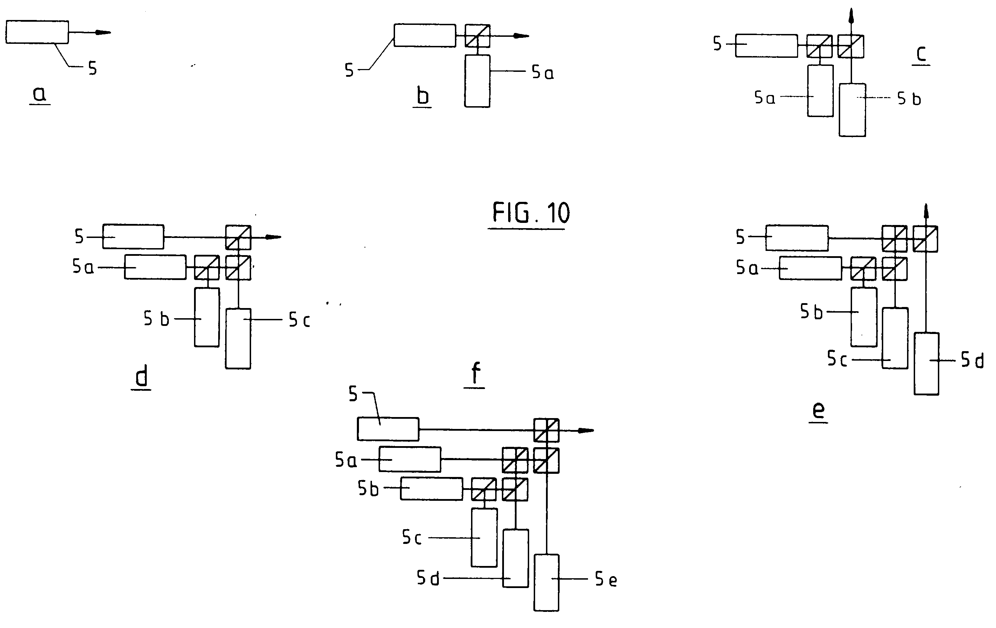

Die Figuren 10 bis 14 zeigen weitere mögliche Ausführungen des Diodenlasers. In der Figur 10 sind in den Positionen nochmals schematisch verschiedene Möglichkeiten für die Verwendung der Diodenlaseranordnungen wiedergegeben. Die Position a zeigt die Verwendung einer einzigen Diodenlaseranordnung 5, wie dies beispielsweise auch in den Figuren 4 und 5 bzw. 6 und 7 für die dortigen Diodenlaser 4 und 4a beschrieben ist.

Die Position b zeigt zwei Diodenlaseranordnungen 5 und 5a, deren Strahlung über ein optisches Koppelelement 18 zu einer Gesamtstrahlung addiert wird.

Die Position c zeigt drei über Kopplungselemente 18 gekoppelte Diodenlaseranordnungen 5, 5a und 5b, und zwar entsprechend dem Diodenlaser 4b.

Die Positionen d - f zeigen weitere Möglichkeiten der Kopplung von insgesamt vier Diodenlaseranordnungen 5 - 5c unter Verwendung von drei Kopplungselementen (Position d), die Kopplung von fünf Diodenlaseranordnungen 5 - 5d unter Verwendung von vier Kopplungselementen 18 (Position e) und die Kopplung von insgesamt sechs Diodenlaseranordnungen (5 - 5e) unter Verwendung von insgesamt fünf Kopplungselementen 18.

Die Kopplungselemente 18 sind vorzugsweise wiederum als Kantenfilter oder andere optische Anordnungen oder Elemente ausgeführt, wie Filteranordnungen, insbesondere Kurz- und Lagpaßfilter, optische Anordnung zur Kopplung in unterschiedlichen Ebenen polarisierter Strahlung usw. In jedem Fall sind die Kopplungselemente 18 so ausgebildet, daß sie ein möglichst verlustfreies Zusammenführen bzw. Addieren der Strahlungen der einzelnen Diodenlaseranordnungen 5 - 5e ermöglichen.

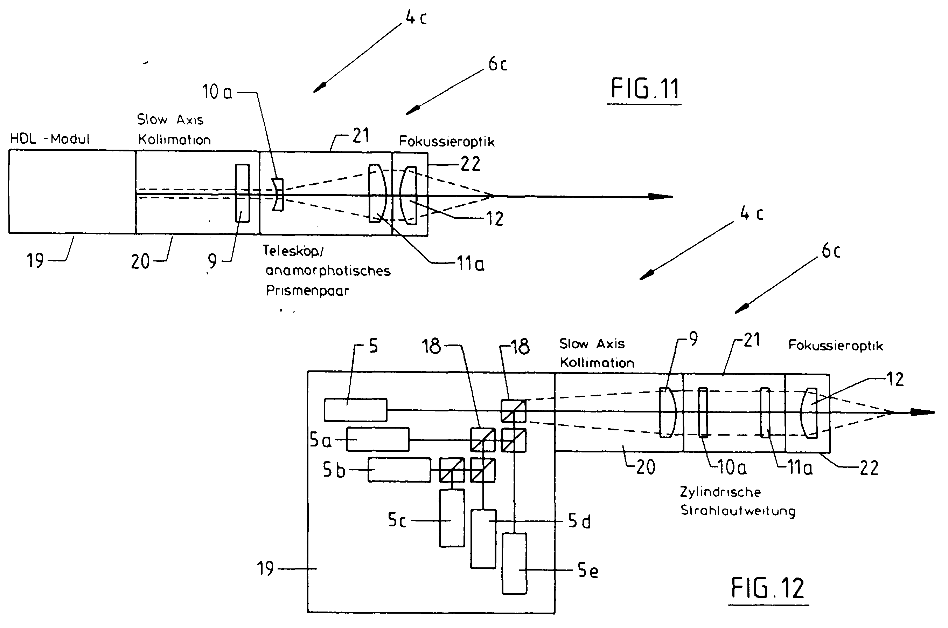

Die Figuren 11 und 12 zeigen als weitere mögliche Ausführungsform einen Diodenlaser 4c, bei dem über fünf Kopplungselemente 18 die Strahlung von insgesamt sechs Diodenlaseranordnungen 5 - 5e zu einer Gesamtstrahlung gekoppelt bzw. summiert ist. Die Fast-Axis-Kollimatoren befinden sich bei dieser Ausführungsform bzw. bei der dortigen Laser-Optik 6c, die im grundsätzlichen Aufbau der Laseroptik 6a entspricht, wiederum jeweils an der zugehörigen Diodenlaseranordnung 5 - 5e. Die Diodenlaseranordnungen 5 - 5e, deren Fast-Axis-Kollimatoren sowie die optischen Kopplungselemente 18 sind in einem Modul 19 vorgesehen.

Zusätzlich zu diesem Modul 19 sind weitere Module 20, 21 und 22 vorgesehen, von denen das Modul 20 den Slow-Axis-Kollimator 9, das Modul 21, die zylindrische Strahlaufweitung, d.h. die Zylinderlinsen 10a und 11a, und das Modul 22 die Fokussieroptik 12 enthält. Die Module 20, 21 und 22 sind so am Modul 19 und aneinander befestigt, daß sich für den Diodenlaser 4c eine der Optik des Diodenlasers 4a entsprechende Laser-Optik 6c ergibt, bei der die Strahlaufweitung im Strahlengang nach dem Slow-Axis-Kollimator 9 und vor der Fokussieroptik 12 erfolgt.

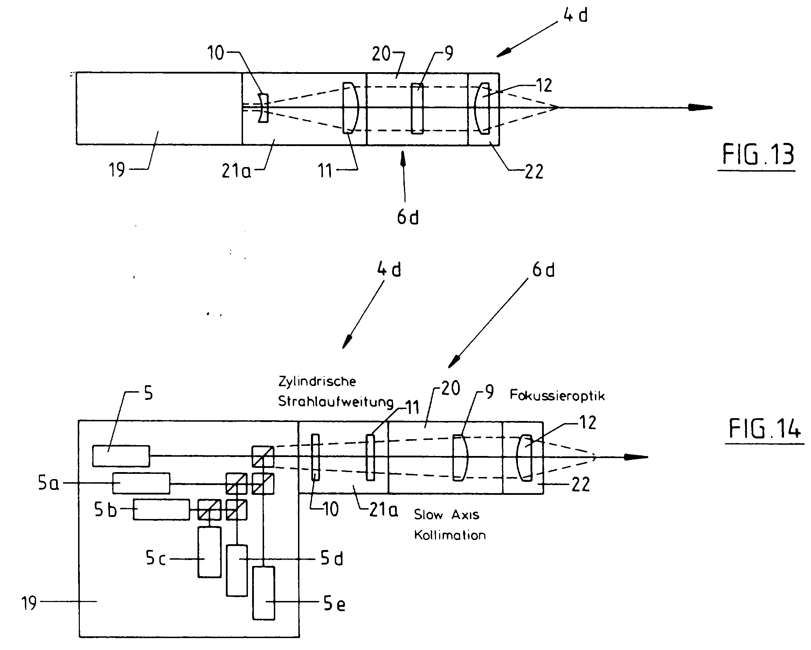

Die Figuren 13 und 14 zeigen einen Diodenlaser 4d, der wiederum modular, d.h. aus mehreren Modulen aufgebaut ist, und zwar aus dem Modul 19 mit den Diodenlaseranordnungen 5 - 5e und dem Kopplungselementen 18, aus dem Modul 20 mit dem Slow-Axis-Kollimator 9, aus einem Modul 21a mit der zylindrischen Strahlaufweitung, d.h. mit den Zylinderlinsen 10 und 11 sowie aus dem Modul 22 mit der Fokussieroptik 12.

Die einzelnen Module sind bei dem Diodenlaser 4d derart aneinander vorgesehen, daß eine dem Diodenlaser 4 bzw. der Laseroptik 6 entsprechende Laser-Optik 6d erreicht ist, bei der die zylindrische Strahlaufweitung (Zylinderlinsen 10 und 11) im Strahlengang vor dem Slow-Axis-Kollimator 9 vorgesehen ist.

Die modulare Ausbildung der Diodenlaser 4c und 4d hat u.a. den Vorteil, daß mit einer vorgegebenen Anzahl von Komponenten die unterschiedlichsten Diodenlaser und/oder Laser-Optiken für die unterschiedlichsten Verwendungs- oder Anwendungszwecke insbesondere auch hinsichtlich Leistung usw. realisierbar sind. So kann beispielsweise anstelle des Moduls 19 mit den insgesamt sechs Diodenlaseranordnungen (5 - 5e) auch ein Modul verwendet werden, welches entsprechend den Positionen a - e der Figur 10 eine andere Anzahl an Diodenlaseranordnungen aufweist.

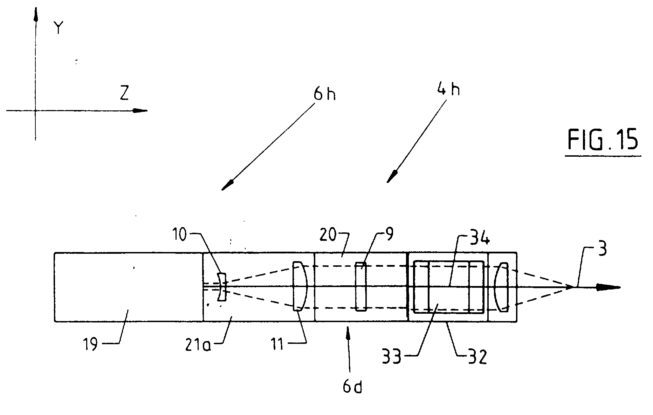

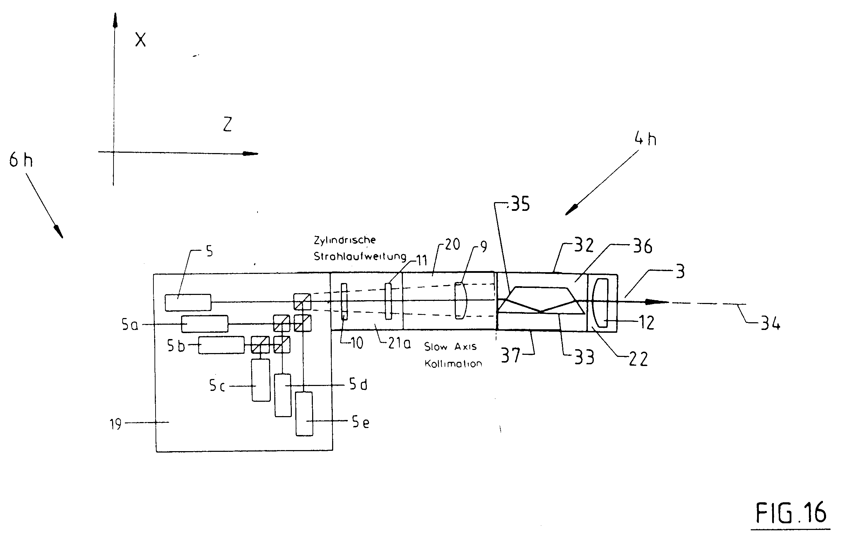

Die Figuren 15 und 16 zeigen einen Diodenlaser 4h mit einer Laseroptik 6h, die der Laseroptik 6e der Figuren 13 und 14 weitestgehend entspricht, d.h. die Module 20, 21a und 22 aufweist. Im Strahlengang der Laseroptik 6h ist zwischen den Modulen 20 und 22 zusätzlich ein Drehmodul 32 vorgesehen, mit dem eine Rotation des Laserstrahls 3 und damit des Linienfokus 13 möglich ist, wobei dieses Drehmodul 32 auch an anderer Stelle vorgesehen sein kann. Als Funktionselement enthält das Drehmodul 32 ein optisches Prisma 33, welches bei der dargestellten Ausführungsform als Dove-Prisma ausgebildet ist und welches in einer die optische Achse 34 des Drehmoduls 32 einschließenden Querschnittsebene einen trapezartigen Querschnitt aufweist, wobei die die optische Achse 34 jeweils unter einem Winkel schneidende Seitenflächen die Strahleintrittsfläche 35 bzw. die Strahlaustrittsfläche 36 bilden. Wie beispielsweise die Figur 16 zeigt, wird der Laserstrahl 3 an der Strahleintrittsfläche 35 beim Eintreten in das Prisma 33 gebeugt, dann anschließend an der unteren, die Basis des Trapez-Querschnittes bildenden Fläche 37 unter Totelreflektion reflektiert und beim Austreten an der Strahlaustrittsfläche 36 erneut gebeugt, so daß die Mittelachse des Laserstrahles 3 sowohl vor dem Prisma 33 als auch nach diesem Prisma mit der optischen Achse 34 zusammenfällt. Durch einen nicht dargestellten Antrieb, beispielsweise Elektromotor, wird das Prisma 33 zum Rotieren des Strahles 3 um seine Strahlachse umlaufend angetrieben.

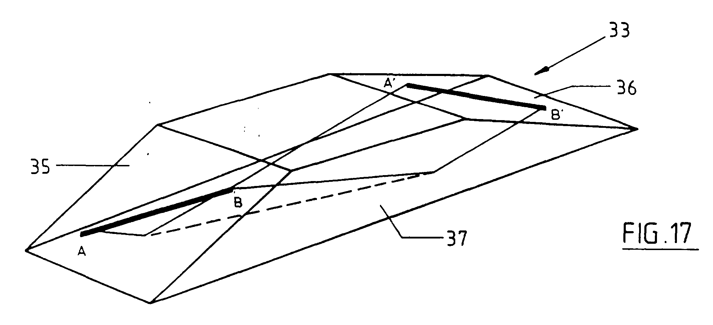

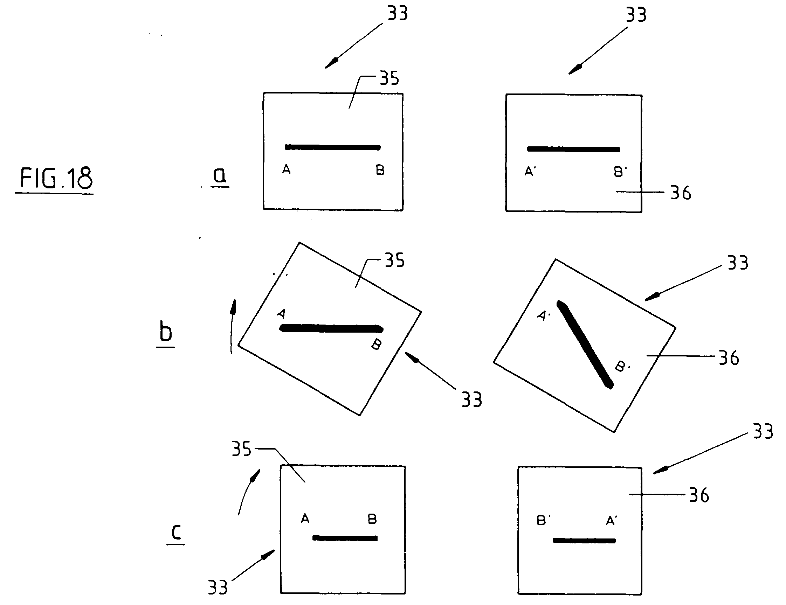

Die Figuren 17 und 18 erläutern die optische Wirkung des Drehprismas 33. In diesen Figuren ist davon ausgegangen, daß der auf die Strahleintrittsfläche 35 auftreffende und aus der Strahlaustrittsfläche 36 austretende Laserstrahl jeweils ein flacher, bandförmiger Strahl ist. Der eintretende Laserstrahl ist in den Positionen a - c der Figur 18 jeweils mit der Strecke AB bezeichnet. Der an der Strahlaustrittsfläche 36 austretende Laserstrahl ist jeweils mit der Strecke A'B' bezeichnet.

Die Positionen a - c geben drei unterschiedliche Drehstellungen des Drehprismas 33 wieder. Die Figuren zeigen, daß bei gleichbleibender Orientierung des auf die Strahleintrittsfläche 35 auftreffenden Laserstrahls 3 der an der Strahlaustrittsfläche 36 austretende Laserstrahl bzw. die Orientierung definierende Strecke A'B' um die optische Achse 34 rotiert. Dies ergibt sich aus der oben beschriebenen Beugung des Strahles an den Flächen 35 und 36 und aus der Reflektion an der Fläche 37, wie dies in der Figur 17 nochmals dargestellt ist.

Durch die Verwendung des Drehmoduls 32 ist es somit möglich, den Diodenlaser 4h nicht drehbar an einem Vorrichtungsteil vorzusehen, d.h. auf die Dreh- oder Rotationseinheit 17 zu verzichten. Grundsätzlich ist es aber auch möglich, sowohl die Dreh- oder Rotationseinheit 17 als auch das Drehmodul 32 zu verwenden, falls dies für spezielle Bearbeitungen und/oder Steuerungen notwendig oder zweckmäßig ist.

Vorstehend wurde davon ausgegangen, daß das Drehprisma 33 um seine optische Achse 34 rotiert wird. Grundsätzlich ist selbstverständlich auch ein Schwenken des Prismas um diese Achse denkbar, wenn dies für spezielle Anwendungen erforderlich ist. Anstelle des Drehprismas 33 können auch andere optische Anordnungen verwendet werden, die einem Dove-Prisma entsprechende Eigenschaften aufweisen, d.h. insbesondere Einrichtungen, bei denen der in einer optischen Achse eintretende Laserstrahl zunächst schräg zu dieser Achse abgelenkt bzw. gebeugt, anschließend in Richtung zur optischen Achse reflektiert und dann nochmals abgelenkt oder gebeugt wird, so daß der Strahl wieder in der optischen Achse verläuft.

Bei der Laseroptik 6h befindet sich das Drehmodul 32 bzw. das Drehprisma 33 im Strahlengang nach der Spiegelanordnung 25 und dem Korrekturprisma 26. Grundsätzlich könnte das Drehprisma 33 auch an anderer Stelle im Strahlengang vorgesehen werden, vorzugsweise aber dort, wo möglichst geringe Strahldivergenzen vorliegen.

### Bezugszeichenliste

- 1: Werkstück
- 2: Bearbeitungskontur
- 3,: Laserstrahl
- 4, 4a, 4b, 4c: Diodenlaser
- 4d, 4h: Diodenlaser
- 5: Diodenlaseranordnung
- 6, 6a, 6b, 6c: Laseroptik
- 6d, 6h: Laseroptik
- 7: Laserchip
- 8: Fast-Axis-Kollimator (in der Y-Z-Ebene)
- 9: Slow-Axis-Kollimator (in der X-Z-Ebene)
- 10, 10a, 10b: Zylinderlinse
- 11, 11a, 11b: Zylinderlinse
- 12: Fokussieroptik
- 13: Linienfokus
- 14: Tangente
- 15: Tisch
- 16: Steuereinrichtung
- 17: Dreh- oder Rotationseinheit
- 18: optisches Koppelelement
- 19, 20: Modul
- 21, 21a: Modul
- 22: Modul
- 32: Drehmodul
- 33: Drehprisma
- 34: optische Achse
- 35: Strahleintrittsfläche
- 36: Strahlaustrittsfläche
- 37: Bodenfläche

## Patentansprüche

1. Vorrichtung zur Laser-Behandlung eines Werkstückes (1), mit wenigstens einem Diodenlaser (4, 4a, 4b, 4c, 4d, 4h) mit einer Laser-Optik (6, 6a, 6b, 6c, 6d, 6h), dessen Laserstrahl auf einer zu bearbeitenden Oberfläche des Werkstückes (1) einen Fokus (13) bildet, der durch Relativbewegung des Diodenlasers (4, 4a, 4b, 4c, 4d, 4h) oder eines diesen Laser aufweisenden Laserkopfes und des Werkstückes (1) beim Bearbeiten entlang einer Arbeits- oder Bearbeitungskontur (2) bewegt wird, **dadurch gekennzeichnet**, daß der Diodenlaser (4, 4a, 4b, 4c, 4d, 4h) mit seiner Laser-Optik (6, 6a, 6b, 6c, 6d, 6h) zur Ausbildung eines Fokus in Form einer Fokuslinie (13) ausgebildet ist, und daß Mittel (16, 17) vorgesehen sind, mit denen ein Ausrichten der Fokuslinie (13) derart erfolgt, daß an jedem Punkt der Bearbeitungskontur (2) die Fokuslinie (13) mit ihrer Längserstreckung die Tangente an die Bearbeitungskontur bildet.

2. Vorrichtung nach Anspruch 1, dadurch gekennzeichnet, daß das Ausrichten der Fokuslinie (13) durch Drehen der Fokuslinie um ihre Mittelachse erfolgt.

3. Vorrichtung nach Anspruch 1 oder 2, dadurch gekennzeichnet, daß das Ausrichten der Fokuslinie (13) durch Drehen des Laserkopfes um die Mittelachse der Fokuslinie (13) erfolgt.

4. Vorrichtung nach einem der vorhergehenden Ansprüche, dadurch gekennzeichnet, daß das Ausrichten der Fokuslinie (13) in Bezug auf die Bearbeitungskontur (2) durch Drehen oder Bewegen der Laseroptik (6, 6a, 6b, 6c, 6d, 6h) oder eines Teils dieser Optik erfolgt, und zwar vorzugsweise bei nicht drehendem Laserkopf.

5. Vorrichtung nach einem der vorhergehenden Ansprüche, dadurch gekennzeichnet, daß als Strahlenquelle wenigstens ein Laserchips (7) vorgesehen ist, welcher wenigstens einen Laser-Licht aussendenden Emitter, der mit seiner aktiven Schicht senkrecht zu einer ersten Achsrichtung (Y-Achse; Z-Achse) liegt und sich in einer zweiten Achsrichtung (X-Achse) erstreckt, oder aber mehrere in der zweiten Achsrichtung nebeneinander vorgesehene Emitter aufweist, wobei die zweite Achsrichtung (X-Achse) senkrecht zur ersten Achsrichtung (Y-Achse, Z-Achse) liegt, daß die Laseroptik (6, 6a, 6b, 6c, 6d, 6h) eine positive oder negative Aufweitungsoptik (10, 11; 10a, 11a; 10b, 11b) zur Änderung der Breite des von den Emittern gelieferten Laser-Strahlbündels in der ersten Achsrichtung (Y-Achse; Z-Achse) oder bei einer Ablenkung und/oder Drehung des Laser-Strahlbündels in einer dieser ersten Achsrichtung entsprechenden gedrehten Achsrichtung erfolgt.

6. Vorrichtung nach einem der vorhergehenden Ansprüche, gekennzeichnet durch wenigstens eine Diodenlaseranordnung (5, 5a, 5b, 5c, 5d, 5e), die aus mehreren, in der ersten Achsrichtung (Y-Achse; Z-Achse) übereinander angeordneten und mit ihren aktiven Schichten senkrecht zu dieser ersten Achsrichtung orientierten Laserchips (7) besteht.

7. Vorrichtung nach einem der vorhergehenden Ansprüche, dadurch gekennzeichnet, daß die Aufweitungsoptik eine positive Aufweitungsoptik (10, 11; 10a, 11a) zur Vergrößerung der Breite des von den Emittern gelieferten Laser-Strahlbündels oder eine negative Aufweitungsoptik (10b, 11b) zur Reduzierung der Breite des von den Emittern gelieferten Laser-Strahlbündels ist.

8. Vorrichtung nach einem der vorhergehenden Ansprüche, dadurch gekennzeichnet, daß daß der aufgeweitete oder verengte Strahl durch eine Fokussieroptik (12) in einen Linienfokus (13) fokussiert wird

9. Vorrichtung nach einem der vorhergehenden Ansprüche, dadurch gekennzeichnet,
daß die Aufweitungsoptik eine teleskopartige Anordnung von Linsen und/oder Spiegeln und/oder Prismen ist, oder
daß die Aufweitungsoptik (10, 11, 10a, 11a; 10b, 11b) eine Zylinderoptik bzw. eine Optik mit Zylinderlinsen ist.

10. Vorrichtung nach einem der vorhergehenden Ansprüche, dadurch gekennzeichnet,
daß die Strahlaufweitung im Strahlenweg zwischen einem Fast-Axis-Kollimator (8) und einem Slow-Axis-Kollimator (9) erfolgt, oder
daß die Strahlaufweitung im Strahlengang nach dem Slow-Axis-Kollimator (9) erfolgt.

11. Vorrichtung nach einem der vorhergehenden Ansprüche, dadurch gekennzeichnet,
daß die Aufweitungsoptik (10, 11, 10a. 11a) so ausgeführt ist, daß eine aufgeweitetes Laser-Strahlenbündel erhalten wird, das in einer Ebene (Y-Z-Ebene) senkrecht zu den aktiven Schichten der wenigstens einen Diodenlaseranordnung (5, 5a, 5b, 5c, 5d, 5e) oder in einer dieser Ebene entsprechenden gedrehten Ebene aufgeweitete parallele Laser-Strahlbündel durch die Fokussieroptik (12) fokussiert wird.

12. Vorrichtung nach einem der vorhergehenden Ansprüche, dadurch gekennzeichnet,
daß die Strahlung mehrerer Diodenlaseranordnungen (5, 5a, 5b, 5c, 5d, 5e) über optische Koppelelemente (18) in der Laseroptik (6b) summiert wird.

13. Vorrichtung nach einem der vorhergehenden Ansprüche, dadurch gekennzeichnet,
daß die Diodenlaseranordnungen (5, 5a, 5b, 5c, 5d, 5e) unterschiedliche Wellenlänge und/oder Polarität aufweisen.

14. Vorrichtung nach einem der vorhergehenden Ansprüche, dadurch gekennzeichnet,
daß als optische Kopplungselemente Kurz-, Lang- oder Bandpaßfilter, vorzugsweise Kantenfilter (18), und/oder optische Anordnungen zur Kopplung von in unterschiedlichen Ebenen polarisierter Laser-Strahlung verwendet werden.

15. Vorrichtung nach einem der vorhergehenden Ansprüche, gekennzeichnet durch ihren modularen Aufbau aus mehreren miteinander verbindbaren Modulen (19, 20, 21, 22, 27, 29, 30), von denen wenigstens ein Modul die als Strahlungsquelle dienende wenigstens eine Diodenlaseranordnung enthält und die übrigen Module Elemente der Laseroptik enthalten.

16. Vorrichtung nach einem der vorhergehenden Ansprüche, dadurch gekennzeichnet,
daß das eine Modul (19) mehrere Diodenlaseranordnungen (5 - 5e) und die zugehörigen optischen Kopplungselemente (18) enthält.

17. Vorrichtung nach einem der vorhergehenden Ansprüche, dadurch gekennzeichnet,
daß die Laseroptik auf mehrere Module (20, 21, 21a, 22, 27, 28, 30) aufgeteilt ist.

18. Vorrichtung nach einem der vorhergehenden Ansprüche, dadurch gekennzeichnet,
daß die Laseroptik (6h) eine im Strahlengang der Laserstrahlung angeordnete bewegliche optische Einrichtung (33) zum Schwenken oder Drehen des Strahles (3) um die Strahlachse aufweist.

19. Vorrichtung nach einem der vorhergehenden Ansprüche, dadurch gekennzeichnet,
daß die optische Einrichtung ein um seine optische Achse (34) drehbares oder schwenkbares Prisma, vorzugsweise Dove-Prisma (33) ist.

20. Verfahren zur Laser-Behandlung eines Werkstückes (1), bei dem (Verfahren) der Laserstrahl wenigstens eines Diodenlasers (4, 4a, 4b, 4c, 4d, 4h) mit einer Laser-Optik (6, 6a, 6b, 6c, 6d, 6h) auf einer zu bearbeitenden Oberfläche des Werkstückes (1) einen Fokus (13) bildet, der durch Relativbewegung des Diodenlasers (4, 4a, 4b, 4c, 4d, 4h) oder eines diesen Laser aufweisenden Laserkopfes und des Werkstückes (1) beim Bearbeiten entlang einer gekrümmten Arbeits- oder Bearbeitungskontur (2) bewegt wird, **dadurch gekennzeichnet**, daß bei Ausbildung des Fokus als Fokuslinie (13) mit einer Komponente der Relativbewegung ein Ausrichten der Fokuslinie (13) derart erfolgt, daß an jedem Punkt der Bearbeitungskontur (2) die Fokuslinie (13) mit ihrer Längserstreckung die Tangente an die Bearbeitungskontur bildet.

21. Verfahren nach Anspruch 20, dadurch gekennzeichnet, daß das Ausrichten der Fokuslinie (13) durch Drehen der Fokuslinie um ihre Mittelachse erfolgt.

22. Verfahren nach einem der vorhergehenden Ansprüche, dadurch gekennzeichnet, daß das Ausrichten der Fokuslinie (13) durch Drehen des Laserkopfes um die Mittelachse der Fokuslinie (13) erfolgt.

23. Verfahren nach einem der vorhergehenden Ansprüche, dadurch gekennzeichnet, daß die Achse der Fokuslinie die Normale auf den zu bearbeitenden Bereich des Werkstückes (1) bildet.

24. Verfahren nach einem der vorhergehenden Ansprüche, dadurch gekennzeichnet, daß das Ausrichten der Fokuslinie (13) in Bezug auf die Bearbeitungskontur (2) durch Drehen oder Bewegen der Laseroptik (6, 6a, 6b, 6c, 6d, 6h) oder eines Teils dieser Optik erfolgt, und zwar vorzugsweise ausschließlich durch Drehen oder Bewegen der Laseroptik (6, 6a, 6b, 6c, 6d, 6h) oder eines Teils dieser Optik.

25. Verfahren nach einem der vorhergehenden Ansprüche, gekennzeichnet durch die Verwendung einer Diodenlaseranordnung oder einer Laseroptik nach einem der vorhergehenden Ansprüche.
